# EUROPEAN PATENT SPECIFICATION

(11) **EP 2 908 218 B1**
(45) Date of publication and mention of the grant of the patent: **14.03.2018**
(21) Application number: 15152621.7
(22) Date of filing: 27.01.2015
(51) Int. Cl.: G06F 3/01, G06F 3/03, G06K 9/00

(54) **GESTURE RECOGNITION APPARATUS AND CONTROL METHOD OF GESTURE RECOGNITION APPARATUS**
GESTENERKENNUNGSVORRICHTUNG UND STEUERVERFAHREN FÜR DIE GESTENERKENNUNGSVORRICHTUNG
APPAREIL DE RECONNAISSANCE DE GESTE ET PROCÉDÉ DE COMMANDE D'UN APPAREIL DE RECONNAISSANCE DE GESTE

(30) Priority: 12.03.2014 JP 2014048910; 12.03.2014 JP 2014048911; 14.02.2014 JP 2014027016
(43) Date of publication of application: 19.08.2015
(73) Proprietor: OMRON CORPORATION, Kyoto-shi, Kyoto 600-8530 (JP)
(72) Inventor: Tanaka, Kiyoaki, Kyoto-shi, Kyoto 600-8530 (JP)
(74) Representative: Kilian Kilian & Partner

(56) References cited:
- EP-A1- 0 823 683
- WO-A1-2013/094786
- US-A1- 2002 041 327
- US-A1- 2010 214 322

## Description

### BACKGROUND OF THE INVENTION

### Field of the Invention

The present invention relates to a gesture recognition apparatus that recognizes an input operation by a gesture.

### Description of the Related Art

Apparatuses for performing an input operation using a gesture with respect to a device that enables operations by pointing such as a computer and an information device are being put to practical use. With such an apparatus, for example, an image of a user is captured using a camera, a motion of a body part of the user is recognized, and a pointer is moved based on a recognition result. Accordingly, the user can operate the pointer on a GUI screen without having to touch an input device.

For example, Japanese Patent Application Laid-open No. 2011-076255 describes a gesture recognition apparatus that detects a movement locus of a part performing a gesture by detecting the part from an acquired image and acquiring a movement direction of a feature point included in the part.

By comprehensively determining a movement direction of the feature point, a motion of the entire part performing the gesture can be acquired with accuracy.
Moreover, US 2010/0214322 A1 discloses a method for controlling a display and a display using the same. The method includes: detecting the approach of a user's hand to the display unit, determining a user's input hand shape; and displaying a display screen corresponds to the determined user's input hand shape. Through the present invention, a user may render a higher menu list and a lower menu list to be displayed on one screen, and may control display screen shift direction and speed, merely by performing a finger extending and folding action. Further, the user may control the size of a display screen by inputting the finger extending and folding action.

### SUMMARY OF THE INVENTION

When moving a pointer with a gesture, even if a movement direction can be shown, an absolute movement amount cannot be shown. Therefore, the gesture recognition apparatus must determine an optimum movement amount of a pointer based on a gesture performed by a user.

However, an optimum movement amount of a pointer is not necessarily the same for all gestures. For example, a movement amount of a finger when a gesture is performed by a fingertip differs from a movement amount of a hand when performing a gesture by moving the entire hand. Therefore, assuming a uniform movement amount of a pointer may cause an inconvenience in that the pointer does not move as desired even when moving a fingertip, the pointer moves more than expected when moving a hand, or the like.

In order to solve this problem, a determination must be made regarding whether or not a gesture is to be made by a large motion or a small motion and a movement amount of the pointer must be adjusted accordingly.

Meanwhile, a gesture recognition apparatus described in Japanese Patent Application Laid-open No. 2012-058854 is equipped with a function that determines a magnitude of a motion of an entire gesture by dividing a captured image into a plurality of areas and detecting an area in which a hand is present.

However, since the apparatus described in Japanese Patent Application Laid-open No. 2012-058854 is intended to detect a graphic drawn by a gesture and determines a magnitude of a motion of the gesture based on a motion required to draw the graphic, the apparatus is unable to make a determination until the gesture is completed. In other words, the described technique cannot be applied to an apparatus that moves a pointer in real time by a gesture.

The present invention has been made in consideration of the problems described above and an object thereof is to provide a technique for appropriately determining a movement amount of a pointer with a gesture recognition apparatus that moves the pointer in accordance with an input gesture. This object is achieved by the gesture recognition apparatus according to claim 1 and the control method according to claim 6. Further advantageous embodiments of the invention are the subject-matter of the dependent claims. Aspects of the invention are set out below.

The gesture recognition apparatus according to the present invention is configured to determine a shape of an object part that is a body part to perform a gesture and determine a movement amount of a pointer using the shape.

Specifically, the gesture recognition apparatus according to the present invention is
a gesture recognition apparatus detecting a gesture from an acquired image and transmitting an instruction to move a pointer in correspondence with the gesture to an object device, the gesture recognition apparatus including: an image acquiring unit configured to acquire an image; a gesture acquiring unit configured to acquire a shape of an object part performing a gesture and a motion of the object part from the acquired image; and a pointer control unit configured to generate an instruction to move a pointer in correspondence with a motion of the object part, and to output the instruction to the object device, wherein the pointer control unit determines a movement amount of the pointer based on the shape of the object part and the motion of the object part.

An object part refers to a part of a user which is used to perform a gesture and which is typically a human hand. While a position of a pointer can be determined based on a motion of the object part, with the gesture recognition apparatus according to the present invention, a movement amount of the pointer is determined based on a shape of the object part.

For example, when the user is performing a gesture by raising an index finger, it is presumable that the user desires to move the pointer by moving a fingertip. Therefore, to enable an operation to be performed with a smaller motion, a movement amount of the pointer is increased as compared to when performing a gesture with an open palm.

By determining a movement amount of the pointer based on a shape of the object part in addition to a motion of the object part as described above, the gesture recognition apparatus according to the present invention achieves an improvement in usability.

In addition, the gesture acquiring unit may be configured to further acquire a size of the object part from the acquired image and the pointer control unit may be configured to determine a movement amount of the pointer further based on the size of the object part.

Since the acquired movement amount of the gesture changes depending on a distance between the user performing the gesture and the apparatus, in order to correct the movement amount of the gesture, the movement amount of the pointer may be changed in accordance with a size of the object part in the image.

Furthermore, the gesture acquiring unit may be configured to determine whether a shape of the object part is a first shape or a second shape that differs from the first shape, and the pointer control unit may be configured to further increase the movement amount of the pointer when the shape of the object part is the first shape, as compared to when the shape of the object part is the second shape.

In this manner, a magnitude of the movement amount of the pointer may be switched between large and small depending on the shape of the object part.

In addition, the object part may be a human hand, the first shape may be a shape by which it is presumable that a gesture is being performed by moving a fingertip, and the second shape may be a shape by which it is presumable that a gesture is being performed by moving an entire hand.

The first and second shapes are, favorably, shapes that enable a determination to be made on whether a user is performing a gesture by moving an entire hand or by moving a fingertip. When it is presumable that a gesture is being performed by moving a fingertip instead of an entire hand, a movement amount of the pointer is further increased. Accordingly, a movement amount of the pointer can be secured even when performing a gesture with a small motion of a fingertip.

Furthermore, the gesture acquiring unit may be configured to determine that a shape of a hand that is an object part is a first shape when at least one of the fingers is raised and to determine that the shape of the hand is a second shape when all of the fingers are raised.

When at least one of the five fingers is raised, it is presumable that a gesture is being performing by using a fingertip, and when all of the fingers are raised, it is presumable that a gesture is being performing by moving the entire hand. Moreover, it is assumed that a state where at least one of the fingers is raised does not include a state where all of the fingers are raised.

In addition, the gesture acquiring unit may be configured to determine that a shape of a hand that is an object part is a first shape when only one finger is extended.

When it is detected that only one finger is being extended as described above, it is presumable that a gesture is being performing by using a fingertip.

Furthermore, the pointer control unit may set a recognition region that is a region, the coordinates of which are associated with a display screen provided on the object device in the acquired image, determine a position of a pointer by mapping a motion of an object part in the recognition region onto the display screen, and change a size of the recognition region, based on a shape of the object part.

A recognition region refers to a region which is set in the acquired image and whose coordinates are mapped to a screen of the object device. Specifically, when the recognition region is small, the pointer can be moved over a greater distance with a smaller gesture as compared to a case where the recognition region is large. In this manner, a movement amount of the pointer may be changed by setting a size of the recognition region based on a shape of the object part.

Moreover, the present invention can be identified as a gesture recognition apparatus including at least a part of the units described above. The present invention can also be identified as a control method of the gesture recognition apparatus, a program that causes the gesture recognition apparatus to be operated, and a recording medium on which the program is recorded. The processes and units described above may be implemented in any combination insofar as technical contradictions do not occur.

According to the present invention, a technique for appropriately determining a movement amount of a pointer with a gesture recognition apparatus that moves the pointer in accordance with an input gesture can be provided.

### BRIEF DESCRIPTION OF THE DRAWINGS

FIG. 1 is a configuration diagram of a gesture recognition system according to a first embodiment;
FIGS. 2A and 2B are diagrams explaining a gesture and a motion of a pointer corresponding to the gesture;
FIGS. 3A and 3B are diagrams explaining a difference in shapes of object parts;
FIG. 4 is a diagram explaining correction data for determining a movement amount of a pointer;
FIG. 5 is a flow chart representing processing performed by a gesture recognition apparatus in the first embodiment;
FIG. 6 is a flow chart representing processing performed by a gesture recognition apparatus in a second embodiment;
FIGS. 7A and 7B are diagrams explaining a recognition region according to the second embodiment;
FIG. 8 is a second diagram explaining a recognition region according to the second embodiment; and
FIG. 9 is a third diagram explaining a recognition region according to the second embodiment.

### DESCRIPTION OF THE EMBODIMENTS

### First Embodiment being a comparative example not claimed

### System Configuration

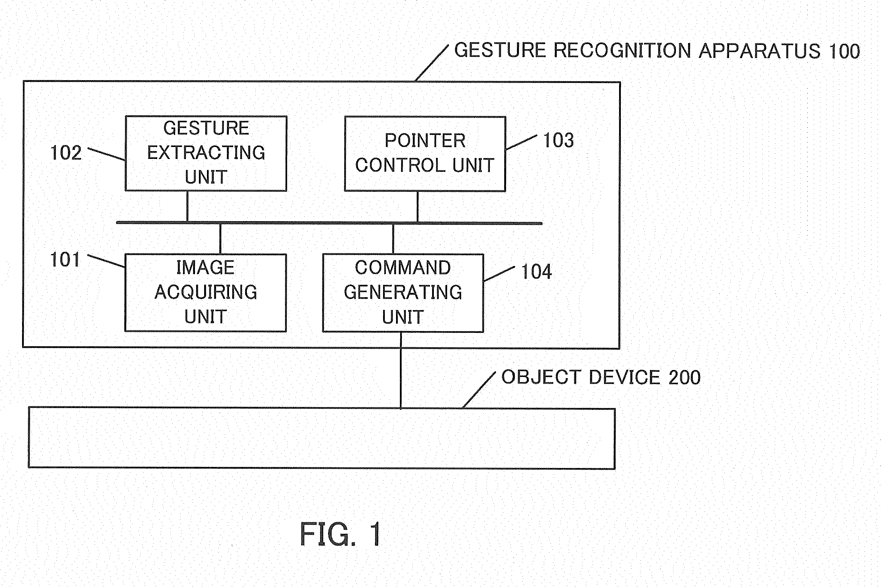

An outline of a gesture recognition system according to the first embodiment being a comparative example not claimed will be described with reference to FIG. 1 which is a system configuration diagram. The gesture recognition system according to the first embodiment is a system constituted by a gesture recognition apparatus 100 and an object device 200.

The object device 200 is a device which includes a screen (not shown) and which is used to perform an input operation through a pointer displayed on the screen. The object device 200 is capable of operating the pointer with a pointing device such as a mouse and moving the pointer according to a signal received from the gesture recognition apparatus 100.

Moreover, the object device 200 may be any kind of device such as a television set, a video recorder, and a computer as long as a signal can be received from the gesture recognition apparatus 100 in a wired or wireless manner. In the description of the present embodiment, the screen which is provided on the object device 200 and which displays a pointer will be referred to as an operation screen.

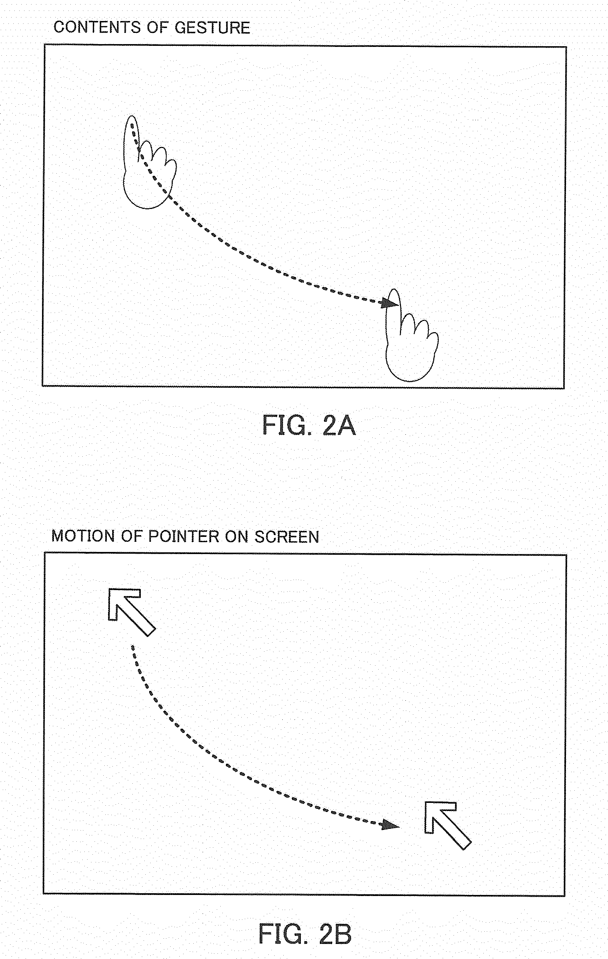

The gesture recognition apparatus 100 is an apparatus which recognizes a gesture performed by a user using a camera and which computes a movement destination of a pointer based on the recognized gesture and transmits an instruction for moving the pointer to the object device 200. For example, when the user performs a gesture such as that shown in FIG. 2A, a signal for moving the pointer is transmitted from the gesture recognition apparatus 100 to the object device 200 and the pointer moves as shown in FIG. 2B.

In the present embodiment, it is assumed that the object device 200 is a television set and the gesture recognition apparatus 100 is an apparatus that is built into the television set. FIGS. 2A and 2B are both diagrams of a television screen as viewed from the user.

Next, the gesture recognition apparatus 100 will be described in detail with reference to FIG. 1.

The gesture recognition apparatus 100 includes an image acquiring unit 101, a gesture extracting unit 102, a pointer control unit 103, and a command generating unit 104.

The image acquiring unit 101 is a unit configured to externally acquire an image. In the present embodiment, an image of the user is captured using a camera (not shown) attached to an upper part of the front of the television screen. The camera used by the image acquiring unit 101 may be a camera that acquires an RGB image or a camera that acquires a grayscale image or an infrared image. In addition, an image need not necessarily be acquired by a camera and, for example, an image which is generated by a distance sensor and which represents a distance distribution (distance image) may be used instead. Alternatively, a combination of a distance sensor and a camera or the like may be adopted.

An image acquired by the image acquiring unit 101 (hereinafter, a camera image) may be any kind of image as long as the image enables a motion of a gesture performed by the user and a shape of a body part having performed the gesture to be acquired. In addition, an angle of view of the camera image may be approximately the same as a viewing angle of the television set.

The gesture extracting unit 102 is a unit configured to detect a body part (hereinafter, an object part) that performs a gesture from a camera image acquired by the image acquiring unit 101 and to extract the gesture by tracking a motion of the object part. In the present embodiment, it is assumed that the user is to perform a gesture using a hand. The gesture extracting unit 102 extracts a gesture by, for example, detecting a region representing a human hand from a camera image and tracking a motion of the region.

In addition, the gesture extracting unit 102 simultaneously acquires information regarding a shape of the object part. The shape of an object part will be described in detail later.

The pointer control unit 103 is a unit configured to determine a movement destination of the pointer based on an extracted gesture. Specifically, a movement direction and a movement amount of the pointer are determined based on a movement direction and a movement amount of the object part. In addition, the movement amount of the pointer is corrected using information regarding the shape of the object part. A specific method thereof will be described later.

The command generating unit 104 is a unit configured to generate a signal for moving the pointer to the movement destination determined by the pointer control unit 103 and to transmit the signal to the object device 200. The generated signal is a signal that instructs the object device 200 to move the pointer and may be, for example, an electric signal, a signal modulated by radio, a pulse-modulated infrared signal, or the like.

The gesture recognition apparatus 100 is a computer including a processor, a main storage device, and an auxiliary storage device. The respective units described above function when a program stored in the auxiliary storage device is loaded to the main storage device and executed by the processor (the processor, the main storage device, and the auxiliary storage device are not shown).

### Outline of control method of pointer

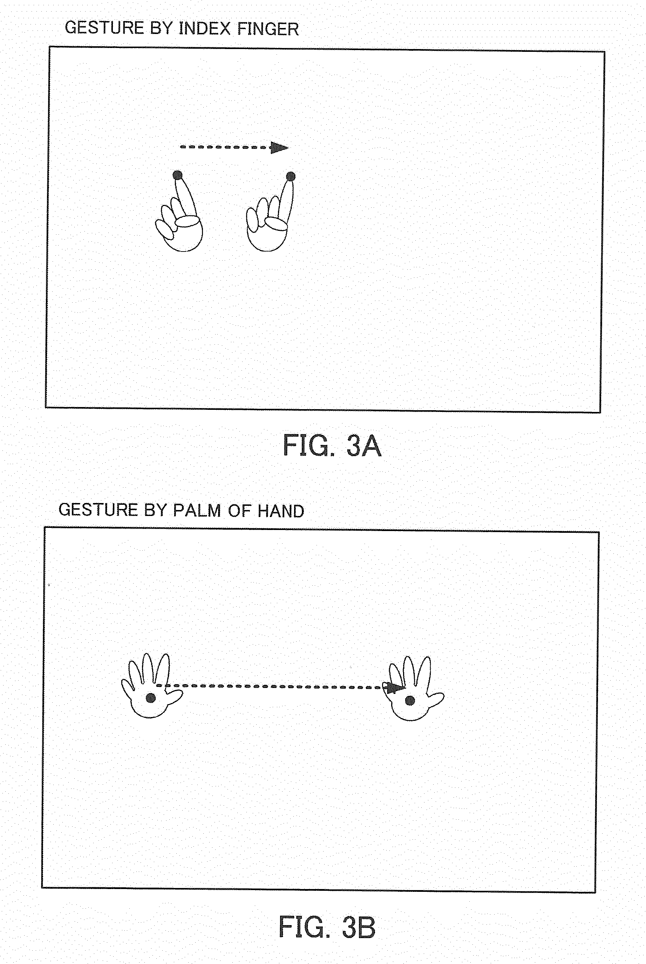

Next, an outline of a method of determining a movement destination of the pointer based on an extracted gesture will be described with reference to FIGS. 3A and 3B. FIG. 3 shows an example of a camera image (parts other than an object part are not illustrated). FIG. 3A represents a gesture involving moving the fingertip of an index finger horizontally and FIG. 3B represents a gesture involving moving the palm of a hand horizontally.

Although the two gestures both signify "moving the pointer to the left", a gesture performed by raising a finger often represents an attempt to operate the pointer with a fine motion of a fingertip while a gesture performed by the palm of a hand often represents an attempt to operate the pointer with a large motion of the entire hand. Therefore, simply determining a movement amount of the pointer in accordance with a movement amount of the object part may prevent a movement amount intended by the user from being obtained and may cause a decline in usability.

In consideration thereof, with the gesture recognition apparatus according to the present embodiment, after determining a movement direction and a movement amount of a pointer based on a movement direction and a movement amount of the object part in a similar manner to a conventional gesture recognition apparatus, the movement amount of the pointer is corrected in accordance with a shape of the object part.

In the present embodiment, shapes of the object part are distinguished according to the number of raised fingers. For example, in the case of FIG. 3A, the number of raised fingers is determined to be one and, in the case of FIG. 3B, the number of raised fingers is determined to be five. In the following description, a state where one finger is raised will be referred to as "shape type 1" and a state where five fingers are raised will be referred to as "shape type 5".

The number of raised fingers may be determined by, for example, applying a template image to an acquired camera image to perform matching or detecting the palm of a hand by template matching and retrieving a finger from a peripheral region. Alternatively, a hand skeleton model or the like may be used. Since known methods can be used to determine the number of fingers, a detailed description will be omitted.

In the present embodiment, after the pointer control unit 103 determines a movement direction and a movement amount of the pointer based on a movement direction and a movement amount of the object part, the movement amount of the pointer is corrected by multiplying the movement amount of the pointer by a correction value corresponding to the determined number of fingers.

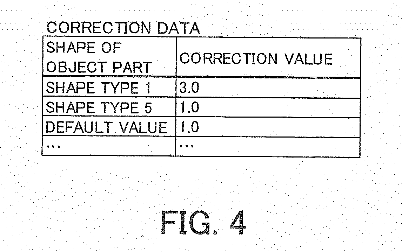

The correction value will now be described. FIG. 4 shows data which is stored in the pointer control unit 103 and which associates a shape of the object part and a correction value with each other. This data will be referred to as correction data.

The smaller the number of raised fingers, the larger the correction value. For example, in the example shown in FIG. 4, 3.0 is multiplied as a correction value when the shape of the object part is shape type 1 and 1.0 is multiplied as a correction value when the shape of the object part is shape type 5. In other words, when the shape of the object part is shape type 1, the movement amount of the pointer is increased threefold as compared to when the shape of the object part is shape type 5.

### Entire processing

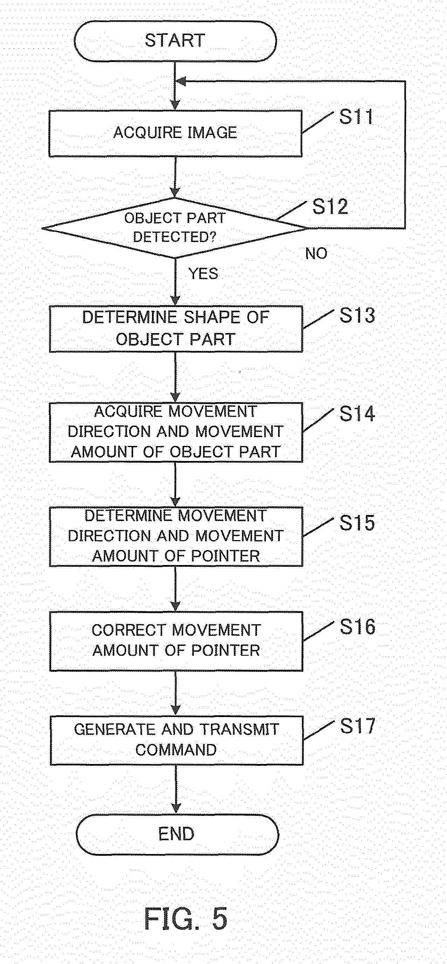

Next, entire processing performed by the gesture recognition apparatus 100 according to the present embodiment will be described with reference to FIG. 5 that is a processing flow chart.

The processing shown in FIG. 5 are started when an operation representing a start of input (for example, when a function requiring pointing is started on the object device) is performed.

First, the image acquiring unit 101 acquires a camera image (step S11). In the present step, for example, an RGB image is acquired using a camera provided in an upper part of the front of the television screen.

Next, the gesture extracting unit 102 attempts to detect an object part from the acquired camera image (step S12). The detection of an object part can be performed by, for example, pattern matching. When there are a plurality of expected shapes of the object part, matching may be performed using a plurality of image templates. At this point, when an object part is not detected, a new image is acquired after standing by for a prescribed period of time and similar processing is repeated.

Next, the gesture extracting unit 102 determines a shape of the detected object part (step S13). In the present embodiment, a determination is made on whether the shape of the object part is shape type 1 or shape type 5. If the shape of the object part is a shape type other than predefined shape types, the processing may be suspended and a return may be made to step S11 or a determination of "not applicable" may be made to continue the processing.

Next, the gesture extracting unit 102 extracts a gesture performed by the object part using the camera image acquired in step S11 (step S14). Moreover, since a plurality of images are required to extract a gesture, when step S14 is first executed, the acquired image is temporarily stored and a return is made to step S11.

By executing step S14, a movement direction and a movement amount of the object part can be acquired. The movement direction and the movement amount of the object part can be acquired by, for example, extracting a feature point included in the object part and tracking the feature point. Since methods therefor are well known, a detailed description will be omitted.

Next, the pointer control unit 103 determines a movement direction and a movement amount of the pointer as described below based on the movement direction and the movement amount of the object part acquired in step S14 (step S15).

### (1) Movement direction of pointer = movement direction of object part (as viewed from user)

When the object part is moved rightward as viewed from the user, the movement amount of the pointer is also rightward.

### (2) Movement amount (pixels) of pointer = movement amount (pixels) of object part x coefficient C₁

The movement amount of the object part refers to the number of pixels in the acquired camera image. In addition, the coefficient C₁ is a coefficient for determining a default movement amount of the pointer. For example, when a resolution of the operation screen is the same as a resolution of the camera, a value of 1.0 may be used as the coefficient C₁, and when the resolutions differ from each other, an arbitrary value may be used to correct the resolutions.

Moreover, the coefficient C₁ may be changed based on a size of the object part in the camera image. For example, when the size of the object part is smaller than an image size, since the user is conceivably performing a gesture while being separated from the apparatus, the coefficient C₁ may be increased.

In addition, different values may be respectively used for a vertical direction and a horizontal direction as the coefficient C₁. Accordingly, for example, when the operation screen and the camera image have different aspect ratios, the aspect ratios can be corrected.

Due to the process of step S15, the movement direction and the movement amount of the pointer are determined.

Next, the pointer control unit 103 corrects the movement amount of the pointer (step S16).

For example, as shown in FIG. 4, let us consider a case where a correction value corresponding to "shape type 1" is 3.0, a correction value corresponding to "shape type 5" is 1.0, and an object part moves between frames by 10 pixels (the coefficient C₁ will not be considered at this time). In this case, when the shape of the object part is shape type 5, the movement amount of the pointer is 10 pixels, and when the shape of the object part is shape type 1, the movement amount of the pointer is 30 pixels.

Next, the command generating unit 104 generates a control signal for moving the pointer and transmits the control signal to the object device 200 (step S17) .In the example described above, for example, a control signal representing an instruction to "move the pointer rightward by 30 pixels" is generated and transmitted to the object device 200.

Moreover, the processes of steps S11 to S17 are periodically executed. In addition, the processing shown in FIG. 5 is ended when an operation representing an end of input (for example, when an operation requiring pointing is ended on the object device) is performed.

As described above, the gesture recognition apparatus according to the first embodiment corrects a movement amount of a pointer according to a shape of an object part having performed a gesture. Accordingly, a case where a gesture is performed by a fingertip (in other words, a case where a motion of the gesture is small) and a case where a gesture is performed by an entire hand (in other words, a case where a motion of the gesture is large) can be distinguished from each other and the movement amount of the pointer can be set appropriately.

Moreover, while the shape of an object part is determined every time step S13 is executed in the description of the present embodiment, a configuration may be adopted in which step S13 is executed only once after detecting an object part and is skipped after a gesture is started. By adopting such a configuration, an amount of processing can be reduced.

However, there may be cases where a gesture ends and a different gesture is started in succession. In such a case, a configuration may be adopted in which step S13 is executed once again. For example, when a shape or a size of an object part changes significantly or when an object part moves out of frame of an image and subsequently reenters the frame, a determination that a different gesture has been started may be made and step S13 may be executed once again. Alternatively, step S13 may be executed once again in accordance with an explicit operation.

### Second Embodiment according to the claimed invention

The second embodiment according to the claimed invention is an embodiment in which a movement destination of a pointer is determined by mapping regions to each other instead of determining the movement destination of the pointer using a movement amount and a movement direction of an object part. A configuration of a gesture recognition apparatus according to the second embodiment is similar to that of the first embodiment with the exception of the points described below.

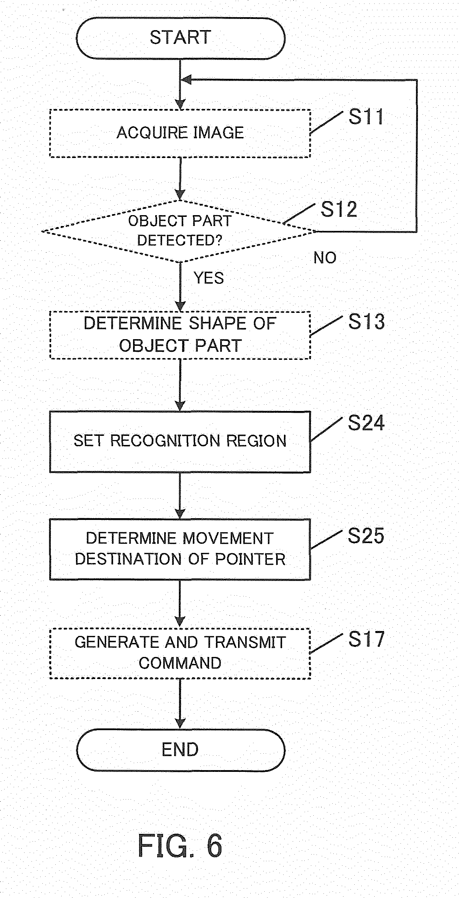

FIG. 6 is a processing flow chart of a gesture recognition apparatus 100 according to the second embodiment. Since processes of steps S11 to S13 and S17 are similar to those of the first embodiment, a description thereof will be omitted.

In step S24, the pointer control unit 103 sets a recognition region that is a region corresponding to an operation screen in an acquired camera image.

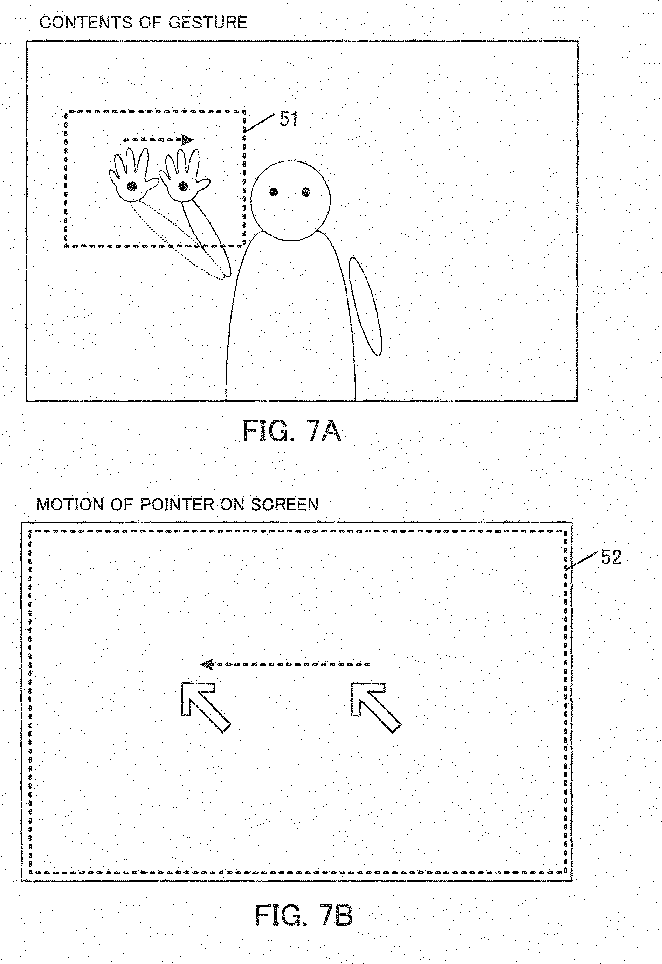

A recognition region will now be described with reference to FIGS. 7A and 7B. FIG. 7A shows an example of a camera image and FIG. 7B shows an example of an operation screen. A recognition region is a region which is set in an acquired camera image and whose coordinates are associated with the operation screen.

In the present example, a recognition region 51 corresponds to an operation screen 52. In other words, top left of the recognition region 51 corresponds to top right of the operation screen 52 and bottom right of the recognition region 51 corresponds to bottom left of the operation screen 52.

Subsequently, in step S25, the gesture extracting unit 102 detects coordinates of an object part in the recognition region and the pointer control unit 103 converts the coordinates to generate corresponding coordinates on the operation screen.

In addition, in step S17, the command generating unit 104 generates a signal for moving the pointer to the coordinates. As a result, the pointer moves on the operation screen in a similar manner to the first embodiment.

In the second embodiment, a movement amount of the pointer is corrected by changing a size of the recognition region based on a detected shape of the object part.

A specific method of setting a recognition region which is performed in step S25 will now be described. In the present embodiment, a recognition region is set as follows.
(1) Size of recognition region = (prescribed size × coefficient C₂) ÷ correction value
(2) Center coordinates of recognition region = center coordinates of object part

The coefficient C₂ is a numerical value for determining the size of the recognition region prior to correction. The coefficient C₂ may be a fixed value or a value that increases or decreases according to the size of the recognition region. For example, when the size of the object part is smaller than the camera image, since the user is conceivably performing a gesture while being separated from the apparatus, the recognition region may be reduced by setting the coefficient C₂ to 1 or less.

In addition, in the second embodiment, the size of the recognition region prior to correction is divided by a correction value. For example, let us consider a case where the size of the recognition region prior to correction is 600 × 450 pixels and the correction data shown in FIG. 4 is to be used.

In this case, if the shape of the object part is shape type 5, division is performed using a correction value of 1.0 and, as a result, the size of the recognition region is calculated as 600 × 450 pixels. In addition, if the shape of the object part is shape type 1, division is performed using a correction value of 3.0 and, as a result, the size of the recognition region is calculated as 200 × 150 pixels.

The respective steps shown in FIG. 6 are periodically executed in a similar manner to the first embodiment. In addition, start and end conditions of the processing shown in FIG. 6 are similar to those of the first embodiment.

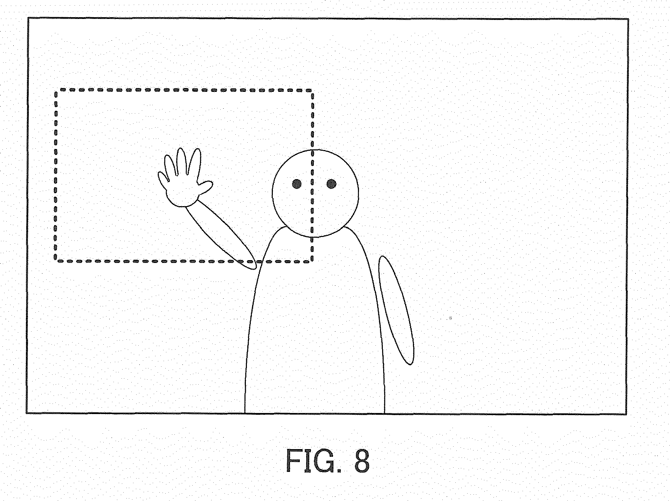

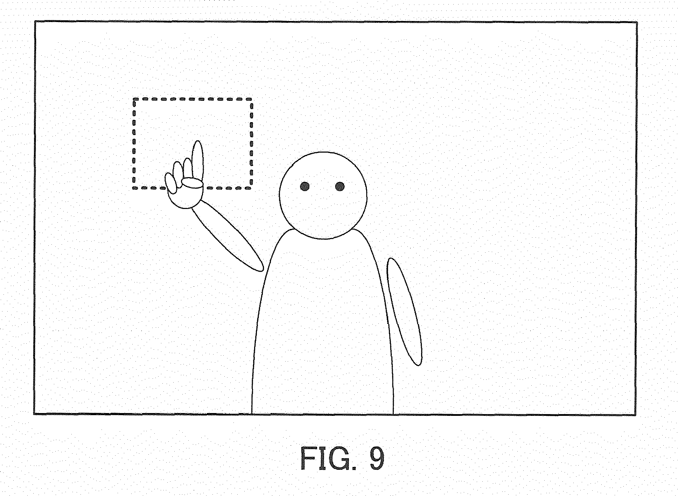

According to the second embodiment, for example, when the shape of the object part is shape type 1, the recognition region is set smaller than when the shape of the object part is shape type 5 as shown in FIGS. 8 and 9. In other words, since the pointer makes a larger movement with respect to a movement amount of the object part, a similar effect to the first embodiment can be achieved.

Moreover, steps S13 and S24 are executed only once after detecting an object part and are to be skipped after a gesture is started. However, there may be cases where a gesture ends and a different gesture is started in succession. In such a case, a configuration may be adopted in which steps S13 and S24 are executed once again. For example, when a shape or a size of an object part changes significantly or when an object part moves out of frame of an image and subsequently reenters the frame, a determination that a different gesture has been started may be made and steps S13 and S24 may be executed once again. Alternatively, steps S13 and S24 may be executed once again in accordance with an explicit operation.

Moreover, while a position of a recognition region is set so that a detected object part is positioned at center of the recognition region in the description of the present embodiment, the position of the recognition region may be changed according to a position of a pointer being displayed on the operation screen. For example, when the pointer is at a left end of the operation screen, the position of the recognition region may be set so that the detected object part is positioned at a left end of the recognition region.

### Modifications

It is to be understood that the descriptions of the respective embodiments merely represent examples of the present invention and, as such, the present invention can be implemented by appropriately modifying or combining the embodiments within the scope of the claims.

For example, while the gesture recognition apparatus 100 has been assumed to be an apparatus that is built into the object device 200 in the description of the embodiments, the gesture recognition apparatus 100 may alternatively be an independent apparatus.

In addition, the gesture recognition apparatus 100 may be implemented as a program that runs on the object device 200. When implementing the gesture recognition apparatus 100 as a program, a configuration in which a program stored in a memory is executed by a processor or a configuration in which the program stored in the memory is executed by a field programmable gate array (FPGA) or an application specific integrated circuit (ASIC) may be adopted.

Furthermore, while an example where an image is acquired using a camera has been presented in the description of the embodiments , an image may be acquired by other methods including receiving an image via a network as long as a gesture can be acquired and, at the same time, a shape of an object part can be distinguished.

Moreover, the object part need not necessarily be a human hand. For example, the object part may be another body part, a marker for inputting a gesture, or the like.

In addition, a "shape of an object part" as described in the present invention refers to a shape recognized by the gesture recognition apparatus through an image and need not necessarily be a physical deformation of the object part. For example, a case where the palm of a hand is held toward a camera and a case where the back of the hand is held toward the camera are respectively treated as different shapes. In a similar manner, when a marker for inputting a gesture is to be used, a case where the marker is held vertically and a case where the marker is held horizontally are respectively treated as different shapes.

Furthermore, while two shape types, namely, "shape type 1" and "shape type 5" are distinguished as shapes of an object part in the description of the embodiments, other shapes may be distinguished. Examples of such other shapes may include a closed hand and a state where two fingers are raised. Alternatively, three or more shapes may be distinguished. In any case, the pointer control unit 103 may be configured to store a correction value associated with each shape and perform a correction according to the method described earlier.

### LIST OF REFERENCE NUMERALS

- 100:: Gesture recognition apparatus
- 101:: Image acquiring unit
- 102:: Gesture extracting unit
- 103:: Pointer control unit
- 104:: Command generating unit
- 200:: Object device

## Claims

1. A gesture recognition apparatus (100) for detecting a gesture from an acquired image and transmitting an instruction to move a pointer in correspondence with the gesture to an object device (200), the pointer being for performing an input operation by operating the pointer on a GUI screen,
the gesture recognition apparatus (100) including:
an image acquiring unit (101) configured to acquire an image;
a gesture extracting unit (102) configured:
to detect an object part from the acquired image, and
to determine a shape of the detected object part performing the gesture and a motion of the object part; and
a pointer control unit (103) configured:
to determine a movement amount of the pointer based on the shape of the object part and the motion of the object part,
to set a recognition region (51) that is a region, coordinates of which are associated with the GUI screen (52) provided on the object device (200), in the acquired image,
to determine a position of a pointer by mapping the motion of the object part in the recognition region (51) onto the GUI screen (52),
to change a size of the recognition region (51) based on the shape of the object part,
to correct the movement amount of the pointer according to the size of the recognition region (51);
to generate an instruction to move the pointer in correspondence with the motion and the shape of the object part and the corrected movement amount of the pointer, and
to output the instruction to the object device (200).

2. The gesture recognition apparatus (100) according to claim 1, wherein
the gesture extracting unit (102) is configured to further acquire a size of the object part from the acquired image, and
the pointer control unit (103) is configured to determine the movement amount of the pointer further based on the size of the object part.

3. The gesture recognition apparatus (100) according to claims 1 or 2, wherein
the gesture extracting unit (102) is configured to determine whether the shape of the object part is a first shape or a second shape that differs from the first shape, and
the pointer control unit (103) is configured to further increase the movement amount of the pointer when the shape of the object part is determined to be the first shape, as compared to when the shape of the object part is determined to be the second shape.

4. The gesture recognition apparatus (100) according to claim 3, wherein
the gesture extracting unit (102) is configured to determine that a shape of a human hand that is the object part is the first shape when one, two, three or four of fingers of the human hand is or are raised, and to determine that the shape of the human hand is the second shape when all of the fingers are raised.

5. The gesture recognition apparatus (100) according to claim 3, wherein
the gesture extracting unit (102) is configured to determine that a shape of a human hand that is the object part is the first shape when only one finger is raised.

6. A control method of a gesture recognition apparatus (100) for detecting a gesture from an acquired image and transmitting an instruction to move a pointer in correspondence with the gesture to an object device (200), the pointer being for performing an input operation by operating the pointer on a GUI screen,
the control method comprising:
acquiring (S11) an image;
detecting an object part from the acquired image;
determining (S13) a shape of the detected object part performing the gesture and a motion of the object part ;
determining a movement amount of the pointer (S14-S16) based on the shape of the object part and the motion of the object part,
setting a recognition region (51) that is a region, coordinates of which are associated with the GUI screen (52) provided on the object device (200), in the acquired image,
determining a position of a pointer by mapping the motion of the object part in the recognition region (51) onto the GUI screen (52),
changing a size of the recognition region (51) based on the shape of the object part,
correcting the movement amount of the pointer according to the size of the recognition region (51); generating (S17) an instruction to move the pointer in correspondence with the motion and the shape of the object part and the corrected movement amount of the pointer, and outputting the instruction to the object device (200).

7. A non-transitory computer readable storing medium for recording a computer program which, when run on a computer, causes the computer to perform the control method according to claim 6.

## Patentansprüche

1. Gestenerkennungsvorrichtung (100) zum Erkennen einer Geste anhand eines aufgenommenen Bilds und Übertragen eines Befehls, um einen Zeiger in Verbindung mit der Geste zu bewegen, zu einer Objektvorrichtung (200), wobei der Zeiger zum Durchführen eines Eingabevorgangs durch Betätigen des Zeigers auf einem GUI-Bildschirm dient,
wobei die Gestenerkennungsvorrichtung (100) Folgendes beinhaltet:
eine Bildaufnahmeeinheit (101), die konfiguriert ist, um ein Bild aufzunehmen;
eine Gestenextrahierungseinheit (102), die konfiguriert ist, um:
einen Objektteil anhand des aufgenommenen Bilds zu erkennen, und
eine Form des erkannten Objektteils, der die Geste durchführt, und eine Bewegung des Objektteils zu bestimmen; und
eine Zeigersteuereinheit (103), die konfiguriert ist, um:
einen Bewegungsbetrag des Zeigers auf Grundlage der Form des Objektteils und der Bewegung des Objektteils zu bestimmen,
einen Erkennungsbereich (51) festzulegen, der ein Bereich, dessen Koordinaten mit dem GUI-Bildschirm (52) verknüpft sind, der auf der Objektvorrichtung (200) bereitgestellt ist, in dem aufgenommenen Bild ist,
eine Position eines Zeigers durch Abbilden der Bewegung des Objektteils in dem Erkennungsbereich (51) auf dem GUI-Bildschirm (52) zu bestimmen,
eine Größe des Erkennungsbereichs (51) auf Grundlage der Form des Objektteils zu verändern,
den Bewegungsbetrag des Zeigers gemäß der Größe des Erkennungsbereichs (51) zu korrigieren;
einen Befehl zu erzeugen, um den Zeiger in Verbindung mit der Bewegung und der Form des Objektteils und dem korrigierten Bewegungsbetrag des Zeigers zu bewegen, und
den Befehl an die Objektvorrichtung (200) auszugeben.

2. Gestenerkennungsvorrichtung (100) nach Anspruch 1, wobei
die Gestenextrahierungseinheit (102) konfiguriert ist, um weiter eine Größe des Objektteils anhand des aufgenommenen Bilds zu erhalten, und
die Zeigersteuereinheit (103) konfiguriert ist, um den Bewegungsbetrag des Zeigers weiter auf Grundlage der Größe des Objektteils zu bestimmen.

3. Gestenerkennungsvorrichtung (100) nach den Ansprüchen 1 oder 2, wobei
die Gestenextrahierungseinheit (102) konfiguriert ist, um zu bestimmen, ob die Form des Objektteils eine erste Form oder eine zweite Form, die sich von der ersten Form unterscheidet, ist, und
die Zeigersteuereinheit (103) konfiguriert ist, um den Bewegungsbetrag des Zeigers weiter zu erhöhen, wenn die Form des Objektteils derart bestimmt wird, dass sie die erste Form ist, im Vergleich mit dem Fall, wenn die Form des Objektteils derart bestimmt wird, dass sie die zweite Form ist.

4. Gestenerkennungsvorrichtung (100) nach Anspruch 3, wobei
die Gestenextrahierungseinheit (102) konfiguriert ist, um zu bestimmen, dass eine Form einer menschlichen Hand, die der Objektteil ist, die erste Form ist, wenn ein, zwei, drei oder vier der Finger der menschlichen Hand aufgerichtet ist oder sind, und um zu bestimmen,
dass die Form der menschlichen Hand die zweite Form ist, wenn alle der Finger aufgerichtet sind.

5. Gestenerkennungsvorrichtung (100) nach Anspruch 3, wobei
die Gestenextrahierungseinheit (102) konfiguriert ist, um zu bestimmen, dass eine Form einer menschlichen Hand, die der Objektteil ist, die erste Form ist, wenn nur ein Finger aufgerichtet ist.

6. Steuerverfahren einer Gestenerkennungsvorrichtung (100) zum Erkennen einer Geste anhand eines aufgenommenen Bilds und Übertragen eines Befehls, um einen Zeiger in Verbindung mit der Geste zu bewegen, zu einer Objektvorrichtung (200), wobei der Zeiger zum Durchführen eines Eingabevorgangs durch Betätigen des Zeigers auf einem GUI-Bildschirm dient,
wobei das Steuerverfahren Folgendes umfasst:
Aufnehmen (S11) eines Bilds;
Erkennen eines Objektteils anhand des aufgenommenen Bilds;
Bestimmen (S13) einer Form des erkannten Objektteils, der die Geste durchführt, und einer Bewegung des Objektteils;
Bestimmen eines Bewegungsbetrags des Zeigers (S14-S16) auf Grundlage der Form des Objektteils und der Bewegung des Objektteils,
Festlegen eines Erkennungsbereichs (51), der ein Bereich ist, dessen Koordinaten mit dem GUI-Bildschirm (52) verknüpft sind, der auf der Objektvorrichtung (200) bereitgestellt ist, in dem aufgenommenen Bild,
Bestimmen einer Position eines Zeigers durch Abbilden der Bewegung des Objektteils in dem Erkennungsbereich (51) auf dem GUI-Bildschirm (52),
Verändern einer Größe des Erkennungsbereichs (51) auf Grundlage der Form des Objektteils,
Korrigieren des Bewegungsbetrags des Zeigers gemäß der Größe des Erkennungsbereichs (51); Erzeugen (S17) eines Befehls, um den Zeiger in Verbindung mit der Bewegung und der Form des Objektteils und dem korrigierten Bewegungsbetrag des Zeigers zu bewegen, und Ausgeben des Befehls an die Objektvorrichtung (200).

7. Nichtflüchtiges computerlesbares Speichermedium zum Aufzeichnen eines Computerprogramms, welches, wenn es auf einem Computer ausgeführt wird, den Computer dazu bringt, das Steuerverfahren nach Anspruch 6 durchzuführen.

## Revendications

1. Appareil de reconnaissance de geste (100) destiné à détecter un geste à partir d'une image acquise et à transmettre une instruction pour déplacer un pointeur en correspondance avec le geste à un dispositif objet (200), le pointeur étant destiné à réaliser une opération d'entrée en actionnant le pointeur sur un écran de GUI,
l'appareil de reconnaissance de geste (100) incluant :
une unité d'acquisition d'image (101) configurée pour acquérir une image ;
une unité d'extraction de geste (102) configurée :
pour détecter une partie d'objet à partir de l'image acquise, et
pour déterminer une forme de la partie d'objet détectée réalisant le geste et un mouvement de la partie d'objet ; et
une unité de commande de pointeur (103) configurée :
pour déterminer une quantité de déplacement du pointeur sur la base de la forme de la partie d'objet et du mouvement de la partie d'objet,
pour définir une région de reconnaissance (51), qui est une région dont des coordonnées sont associées à l'écran de GUI (52), prévue sur le dispositif objet (200), dans l'image acquise,
pour déterminer une position d'un pointeur en mappant le mouvement de la partie d'objet dans la région de reconnaissance (51) à l'écran de GUI (52),
pour changer une taille de la région de reconnaissance (51) sur la base de la forme de la partie d'objet,
pour corriger la quantité de déplacement du pointeur selon la taille de la région de reconnaissance (51) ;
pour générer une instruction pour déplacer le pointeur en correspondance avec le mouvement et la forme de la partie d'objet et la quantité de déplacement corrigée du pointeur, et
pour fournir l'instruction au dispositif objet (200).

2. Appareil de reconnaissance de geste (100) selon la revendication 1, dans lequel
l'unité d'extraction de geste (102) est configurée pour acquérir en outre une taille de la partie d'objet à partir de l'image acquise, et
l'unité de commande de pointeur (103) est configurée pour déterminer la quantité de déplacement du pointeur en outre sur la base de la taille de la partie d'objet.

3. Appareil de reconnaissance de geste (100) selon les revendications 1 ou 2, dans lequel
l'unité d'extraction de geste (102) est configurée pour déterminer si la forme de la partie d'objet est une première forme ou une seconde forme qui diffère de la première forme, et
l'unité de commande de pointeur (103) est configurée pour augmenter en outre la quantité de déplacement du pointeur lorsqu'il est déterminé que la forme de la partie d'objet est la première forme, en comparaison au moment lorsqu'il est déterminé que la forme de la partie d'objet est la seconde forme.

4. Appareil de reconnaissance de geste (100) selon la revendication 3, dans lequel
l'unité d'extraction de geste (102) est configurée pour déterminer qu'une forme d'une main humaine qui est la partie d'objet est la première forme lorsqu'un, deux, trois ou quatre des doigts de la main humaine est ou sont levés, et pour déterminer que la forme de la main humaine est la seconde forme lorsque tous les doigts sont levés.

5. Appareil de reconnaissance de geste (100) selon la revendication 3, dans lequel
l'unité d'extraction de geste (102) est configurée pour déterminer qu'une forme d'une main humaine qui est la partie d'objet est la première forme lorsqu'un seul doigt est levé.

6. Méthode de commande d'un appareil de reconnaissance de geste (100) pour détecter un geste à partir d'une image acquise et transmettre une instruction pour déplacer un pointeur en correspondance avec le geste à un dispositif objet (200), le pointeur étant destiné à réaliser une opération d'entrée en actionnant le pointeur sur un écran de GUI,
la méthode de commande comprenant :
l'acquisition (S11) d'une image ;
la détection d'une partie d'objet à partir de l'image acquise ;
la détermination (S13) d'une forme de la partie d'objet détectée réalisant le geste et d'un mouvement de la partie d'objet ;
la détermination d'une quantité de déplacement du pointeur (S14 à S16) sur la base de la forme de la partie d'objet et du mouvement de la partie d'objet,
la définition d'une région de reconnaissance (51) qui est une région dont les coordonnées sont associées à l'écran de GUI (52), prévue sur le dispositif objet (200), dans l'image acquise,
la détermination d'une position d'un pointeur en mappant le mouvement de la partie d'objet dans la région de reconnaissance (51) à l'écran de GUI (52),
le changement d'une taille de la région de reconnaissance (51) sur la base de la forme de la partie d'objet,
la correction de la quantité de déplacement du pointeur selon la taille de la région de reconnaissance (51) ; la génération (S17) d'une instruction pour déplacer le pointeur en correspondance avec le mouvement et la forme de la partie d'objet et la quantité de déplacement corrigée du pointeur, et la fourniture de l'instruction au dispositif objet (200).

7. Support d'enregistrement non transitoire lisible par ordinateur pour enregistrer un programme d'ordinateur qui, lorsqu'il est exécuté sur un ordinateur, amène l'ordinateur à réaliser la méthode de commande selon la revendication 6.
